# EUROPÄISCHE PATENTSCHRIFT

(11) **EP 1 048 195 B1**
(45) Veröffentlichungstag und Bekanntmachung des Hinweises auf die Patenterteilung: **08.09.2004**
(21) Anmeldenummer: 00108455.7
(22) Anmeldetag: 18.04.2000
(51) Int. Cl.: A01B 73/00, A01D 89/00, B62D 49/06, B60B 35/10

(54) **Schwenkeinrichtung für Stützräder**
Pivoting device for support wheels
Dispositif de pivotement pour roues de support

(30) Priorität: 28.04.1999 DE 19919309
(43) Veröffentlichungstag der Anmeldung: 02.11.2000
(73) Patentinhaber: Usines Claas France, 57140 St. Remy/Woippy (FR)
(72) Erfinder: Bonnewitz, Bernard, 57130 Vaux (FR)
(74) Vertreter: Kus, Sascha

(56) Entgegenhaltungen:
- DE-A- 4 304 931
- DE-B- 1 072 892
- DE-U- 29 713 081
- FR-A- 1 072 827
- FR-A- 2 309 127
- US-A- 3 899 037

## Beschreibung

Die Erfindung bezieht sich auf eine Schwenkeinrichtung für zwischen Anschlägen in einem Schwenkwinkel drehbar gelagerten Stützräder an Anbaugeräten für landwirtschaftliche Maschinen, insbesondere für Schwadaufnahmeeinrichtungen an Feldhäckslern und Ballenpressen, aber auch andere gezogene oder angebaute Geräte wie Schneidwerke, Wender, Schwader, Mähwerke etc., wobei die über Tragarme mit den Seitenwänden des Vorsatzgerätes verbundenen Stützräder zur Abstützung des Anbaugerätes am Feldboden dienen und die Stützräder in eine die Breite des Anbaugerätes vergrößernde und in eine die Breite des Anbaugeätes verringernde Stellung schwenkbar sind.

Anbaugeräte weisen Stützräder auf, um einerseits das Gewicht der Anbaugeräte zumindest teilweise auf dem Boden abzustützen und andererseits beweglich angeordnete Komponenten eines Anbaugerätes so zu steuern, daß dieses in seiner Verschwenkstellung die Bodenkontur kopiert. Dabei weisen die Stützräder eine um eine im wesentlichen vertikale Achse drehbare Lagerung auf, damit sich die Stützräder beim Durchfahren von Kurven dem Kurvenradius anpassen können und nicht über den Boden radieren. Um das Fahrverhalten ruhig zu halten und die Funktion abzusichern, ist der Schwenkwinkel auf einen sinnvollen Bereich, z.B. 45° durch Anschläge beschränkt, sodaß ein Stützrad aus der Geradeausstellung um jeweils 22,5 ° nach rechts und links verschwenkt werden kann. Zur Aufnahmemöglichkeit eines breiten Erntegutschwades bzw. zur Realisierung einer möglichst großen Arbeitsbreite eines Anbaugerätes weisen die Aufnahmeeinrichtungen insgesamt eine entsprechend große Breite auf Mit den zusätzlich an beiden seitlichen Bereichen angeordneten Stützrädern erreichen die Aufnahmeeinrichtungen und Anbaugeräte eine Breite, die größer als die Breite der übrigen Erntemaschine sein kann. Da dies zu Behinderungen bei Transportfahrten im öffentlichen Straßenverkehr beziehungsweise zu einer Überschreitung der zulässigen Fahrzeugbreite führt, sind bereits verschiedene Ausführungen bekannt, die die Breitenabmessungen in der Transportstellung reduzieren. Aber auch sonst kann sich die zusätzliche Breite durch die seitlich angeordneten Stützräder nachteilig auswirken, beispielsweise beim Manövrieren mit der landwirtschaftlichen Maschine.

So ist beispielsweise ein Vorsatzgerät für Erntemaschinen bekannt (DE 297 13 081 U1), dessen Stützräder in der Transportstellung durch eine von Hand ausgelöste Schwenkbewegung mittels zweier oder eines Doppelschwenklagers um zunächst 180° in eine Position hinter das Vorsatzgerät geschwenkt und anschließend noch zur Aufhebung des Kontaktes mit dem Feldboden angehoben werden. Obwohl mit dieser Ausführung die Stützräder in der Transportstellung gegenüber der Seitenwand des Vorsatzgerätes keinen Überstand mehr aufweisen, ist sowohl der konstruktiv dafür erforderliche Bauraumbedarf zwischen der Rückwand des Vorsatzgerärtes und den vorderen Laufrädern der Erntemaschine als auch der notwendige Aufwand für die manuelle Bedienung sehr hoch.

Der Erfindung liegt die Aufgabe zugrunde, eine Schwenkeinrichtung für Stützräder so auszuführen, daß sowohl eine einfache Bedienbarkeit als auch eine bauraumgünstige Anordnung an der Erntemaschine erreicht wird, wobei die Laufrichtung der Stützräder trotz der Verschwenkung annähernd beibehalten wird.

Erfindungsgemäß wird diese Aufgabe durch die im Schutzanspruch 1 genannten Merkmale gelöst. Weitere vorteilhafte Ausführungen des Erfindungsgegenstandes ergeben sich aus den nachgeordneten Ansprüchen.

Die erfindungsgemäße Ausführung ermöglicht erlaubt es, durch mindestens zwei Koppelhebel den Schwenkbolzen in einer Position zu halten, in der die Stützräder trotz der Anschläge in beiden Endlagen weiterhin geradeaus laufen können. Wenn die Koppelhebel parallel zueinander verschwenkt werden, bleiben die Freiheitsgrade zwischen den beiden Anschlägen, zwischen denen sich das Stützrad drehen kann, unabhängig von der Verschwenkstellung erhalten. Bei einer Befestigung der Koppelhebel an einem schwenkbar gelagerten Tragarm kann neben der seitlichen Verschwenkung auch eine Höheneinstellung vorgenommen werden. Wenn die Koppelhebel um nicht senkrecht angeordnete Schwenklager verschwenkbar sind, kombiniert die Verschwenkbewegung eine seitliche Verlagerung der Stützräder mit einer Veränderung der Höhenlage. Durch die hydraulische Betätigung der Schwenkeinrichtung vom Fahrerstand der Emtemaschine aus wird eine einfache Bedienung möglich. Bei einer Kombination der nicht senkrecht angeordneten Schwenklager mit einer hydraulischen Betätigung können durch Ausfahren der Hydraulikzlinder die Stützräder von einer niedrigen seitlichen in eine höhere vor dem Anbaugerät befindliche Schwenkposition verlagert werden. In jeder Position zwischen der maximalen niedrigen seitlichen wie auch maximalen höheren vorderen Position der Stützräder können diese das Anbaugerät abstützen, sodaß durch die erfindungsgemäße Anordnung eine fernbetätigbare stufenlose Höhenanpassung des Anbaugerätes möglich ist. Auch in der Transportstellung schützen die vorgeschwenkten Stützräder das Anbaugerät vor möglichen Kollisionen mit Hindernissen oder vor Straßenunebenheiten. Alle genannten Vorteile sind mit leichen Einschränkungen auch bei manueller Betätigung erzielbar. Bei einer unterschiedlich steuerbaren Ausfahrposition der Hydraulikzylinder in Kombination mit nicht senkrecht angeordneten Schwenklagern läßt sich eine aktive, möglicherweise von einer zusätzlichen Steuerelektronik geregelte Verschwenkung des von den Stützrädern abgestützen Anbaugerätes erzielen. Infolge der vorteilhaften Ausbildung des Schwenkmechanismusses und der günstigen Anordnung der Stützräder ergibt sich insgesamt ein geringer Bauraumbedarf

Die Erfindung wird nachstehend an einem Ausführungsbeispiel näher erläutert. In der zugehörigen Zeichnung zeigen:
- Figur 1: die Draufsicht auf eine Aufnehmertrommel mit Stützrädern, wobei sich das in Fahrtrichtung der Emtemaschine rechts angeordnete Stützrad in der Arbeitsstellung und das auf der linken Seite angeordnete Stützrad sich in der Transportstellung befindet,
- Figur 2: eine Seitenansicht eines Stützrades in der Arbeitsstellung,
- Figur 3: die Draufsicht auf ein Stützrad, wobei die Arbeitsstellung mit Vollinien und die Transportstellung mit Strich-Punkt-Linien dargestellt ist,
- Figur 4: eine abgewandelte Seitenansicht, bei der ein Stützrad bei Verschwenkung höhenverlagert wird.

Das Ausführungsbeispiel soll anhand einer Pickup- oder Aufnehmertrommel als Anbaugerät erläutert werden, was aber keineswegs bedeutet, daß die Anwendung der erfinderischen Idee auf dieses Ausführungsbeispiel begrenzt sein soll. Es läßt sich auf alle landwirtschaftlichen Geräte übertragen, die angebaut oder gezogen sind und die vollständig oder von denen nur einzelne Komponenten über Stützräder auf dem Boden abgestützt werden. Beispielsweise kommen auch Wender und Schwader oder Schneidwerke von Erntemaschinen in Betracht. Auch können beschriebene konstruktive Elemente durch bekannte Mittel ausgetauscht oder ergänzt werden, so beispielsweise der im Ausführungsbeispiel gezeigte einzelne Luftreifen durch ein Tademfahrwerk mit Doppelschwinge. Je nach Anforderungen können auch die Koppelhebel eine andere Form oder räumliche Lage aufweisen als im Ausführungsbeispiel gezeigt.

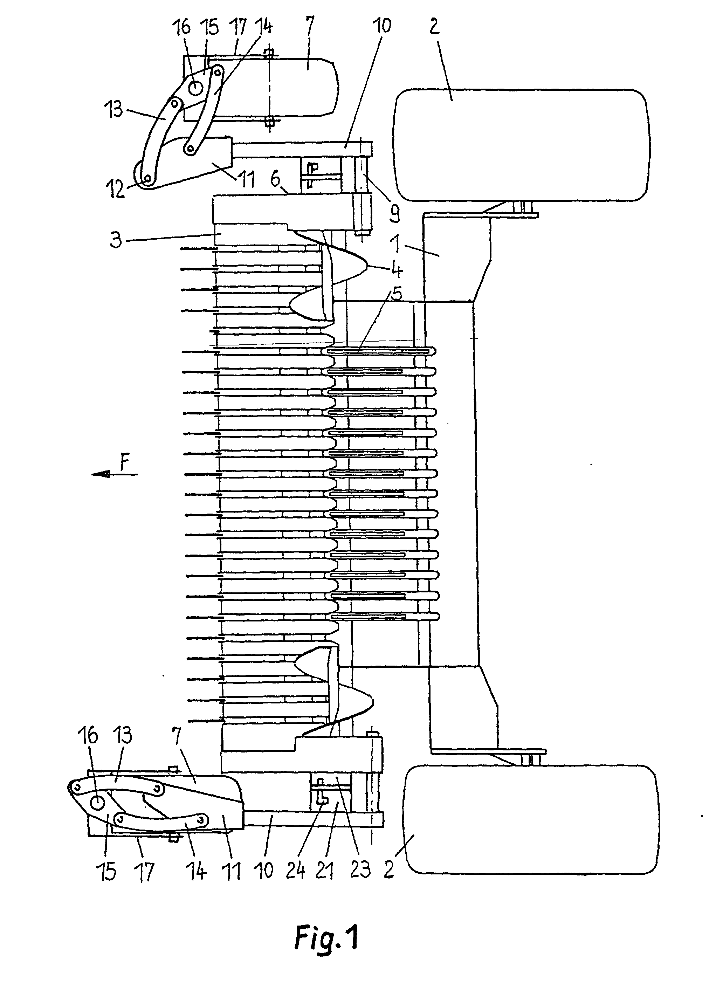

In einer in Figur 1 nicht näher dargestellten Erntemaschine 1 ist im Bereich vor den vorderen Laufrädern 2, die die Gesamtmaschine tragen, eine Aukehrnertrommel 3 angeordnet. Mit ihrer Hilfe wird das in Schwaden auf dem Feldboden abgelegte Emtegut aufgenommen und zur weiteren Bearbeitung in die Emtemaschine 1 gefördert. Um eine große Aufnahmebreite zu ermöglichen, sind an beiden Seitenbereichen der Aufnehmertrommel 3 seitliche Zuführschnekken 4 angeordnet, die das aufgenommene Erntegut auf die Breite der anschließenden Fördereinrichtung 5 zusammenführen. Zur Abstützung der Aufnehmertrommel 3 am Feldboden sind im Bereich neben den Seitenwänden 6 der Aufnehmertrommel 3 Stützräder 7 angeordnet. Diese sind über je einen zugeordneten Hydraulikzylinder 8 in eine Arbeits- und in eine Transportstellung schwenkbar. An den Seitenwänden 6 der Aufnehmertrommel 3 ist ein etwa horizontal verlaufender Lagerzapfen 9 befestigt, an dem ein höhenverschwenkbarer Tragarm 10 angeordnet ist. Am vorderen freien Ende des parallel zur Seitenwand 6 der Aufnehmertrommel 3 verlaufenden Tragarmes 10 sind Koppelplatten 11 befestigt, an denen an festehenden Bolzen 12 Koppelhebel 13, 14 schwenkbeweglich angeschlossen sind, die mit Schwenkplatten 15 verbunden sind. Zusätzlich zu den zwei Koppelhebeln können noch weitere Koppelhebel vorgesehen werden, je nachdem, welche Belastungen aufgenommen und welche Schwenkbewegungen vorgenommen werden sollen. Die Schwenkplatten 15 stehen über einen vertikal angeordneten Schwenkbolzen 16 mit einer Radgabel 17 zur Aufnahme des Stützrades 7 in Verbindung. Die in Figur 1 gezeigte Ausführung kann manuell betätigt werden.

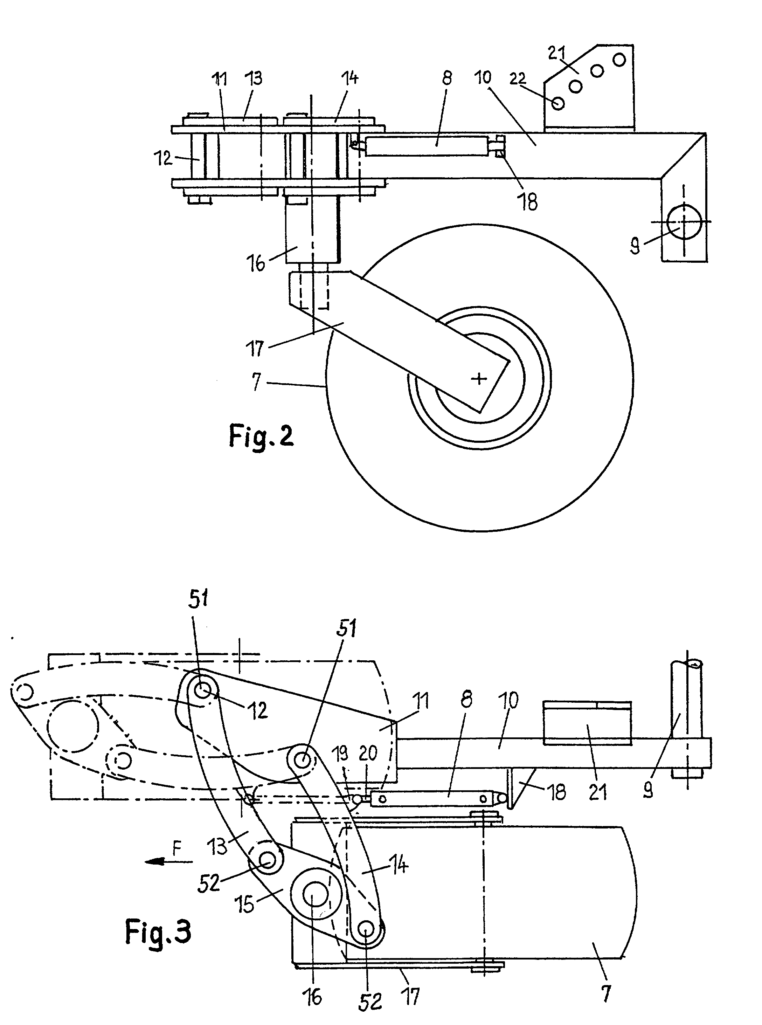

Zwischen einer seitlichen Konsole 18 am Tragarm 10 und einer mit dem Koppelhebel 14 verbundenen Halterung 19 ist in den Figuren 2 und 3 gemäß einer Ausgestaltung der Erfindung ein Hydraulikzylinder 8 angeordnet, der mit dem Hydrauliksystem der Erntemaschine 1 in Verbindung steht. Durch das Betätigen der Hydraulikzylinder 8 vom Fahrerstand der Erntemaschine 1 oder der Kabine einer Zugmaschine aus werden die Koppelhebel 13, 14 um die an der Koppelplatte 11 befestigten Bolzen 12 bewegt und dadurch die Schwenkplatte 15 mit der Radgabel 17 und dem daran gelagerten Stützrad 7 in einer horizontalen Ebene geschwenkt. Entsprechend der jeweiligen Bewegungsrichtung der Kolbenstange 20 des Hydraulikzylinders 8 wird das Stützrad 7 seitlich neben die Aufnehmertrommel 3 in die Arbeits- beziehungsweise vor dem Tragarm 10 in die Transportstellung geschwenkt. Innerhalb des Schwenkbereiches ist die Abstützung der Aufnehmertrommel 3 am Feldboden durch die Stützräder 7 in jeder Zwischenstellung möglich.

Die Höhenlage der Stützräder 7 ist in dem in Figuren 2 und 3 gezeigten Ausführungsbeispiel gegenüber der Aufnehmertrommel 3 manuell einstellbar ausgebildet. Hierzu ist an der Oberseite des Tragarms 10 ein Stellblech 21 mit mehreren höhenversetzten Bohrungen 22 angeordnet. An der gegenüberliegenden Position befindet sich an der Seitenwand 6 der Aufnehmertrommel 3 ein gleichartiges Profilblech 23, das ebenfalls mit Bohrungen versehen ist. Mittels eines Steckbolzens 24 wird das Stellblech 21 mit dem Profilblech 23 in der erforderlichen Stellung miteinander arretiert.

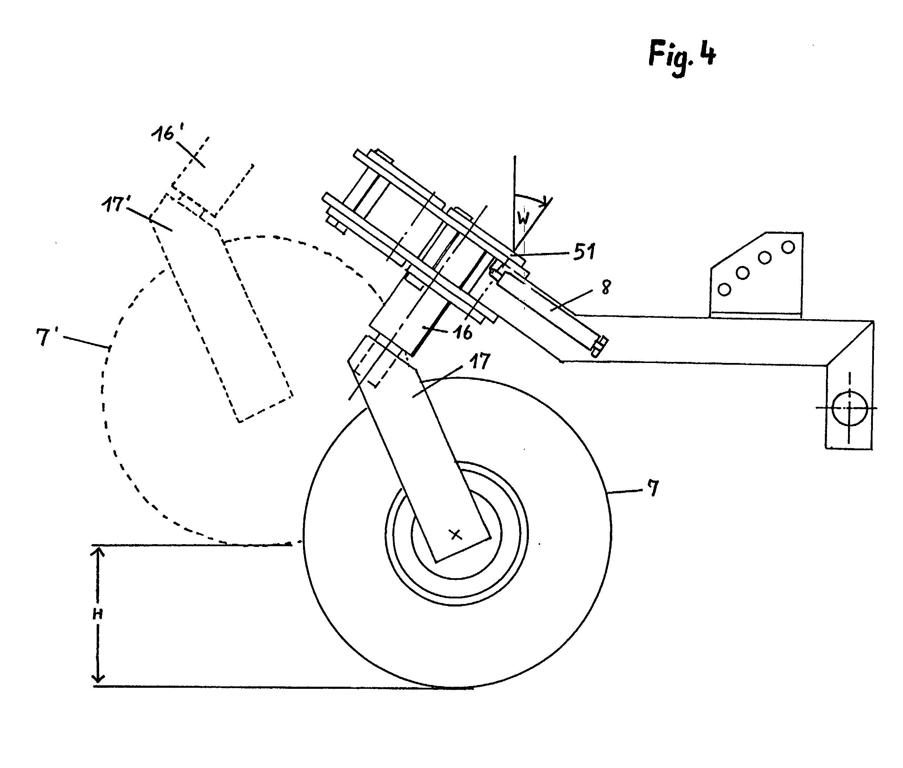

In Figur 4 ist eine weitere Abwandlung der Erfindung gezeigt. Die anbaugeräteseitigen Schwenklager 51 sind gegenüber der Senkrechten um einen Winkel W angestellt. Wird bei dieser Ausführung der Hydraulikzylinder 8 betätigt, so werden die Koppelhebel 13, 14 nach vorn und oben verlagert. Wenn der Hydraulikzylinder 8 seinen Endanschlag erreicht, ergibt sich für das Stützrad 7 eine Endposition, die der strichpunktiert dargestellten Lage 7' entspricht. Auch der Schwenkbolzen 16 und die Radgabel 17 sind in die Endpositionen 16', 17' verlagert. Zwischen den beiden möglichen Endlagen ergibt sich bei einer Anstellung der Schwenklager 51 und/oder 52 um den Winkel W eine Höhenverlagerung des Stützrades 7 um den Höhenwert H.

### Bezugszeichenliste

- 1 -: Erntemaschine
- 2 -: Laufräder
- 3: Aufnehmertrommel
- 4 -: Zuführschnecken
- 5 -: Fördereinrichtung
- 6 -: Seitenwände
- 7 -: Stützräder
- 8 -: Hydraulikzylinder
- 9 -: Lagerzapfen
- 10 -: Tragarm
- 11 -: Koppelplatten
- 12 -: Bolzen
- 13, 14 -: Koppelhebel
- 15 -: Schwenkplatten
- 16 -: Schwenkbolzen
- 17 -: Radgabel
- 18 -: Konsole
- 19 -: Halterung
- 20 -: Kolbenstange
- 21 -: Stellblech
- 22 -: Bohrungen
- 23 -: Profilblech
- 24 -: Steckbolzen
- 51: Schwenklager
- 52: Schwenklager
- F -: Fahrtrichtung
- H -: Höhe
- W -: Winkel
- 7' -: Stützrad
- 16' -: Schwenkbolzen
- 17' -: Radgabel

## Patentansprüche

1. Schwenkeinrichtung für zwischen Anschlägen in einem Schwenkwinkel drehbar gelagerte Stützräder (7) an Anbaugeräten für landwirtschaftliche Maschinen, wobei die über Tragarme (10) mit den Seitenwänden (6) des Vorsatzgerätes verbundenen Stützräder zur Abstützung des Anbaugerätes bzw. Bodenkopierung am Boden dienen und die Stützräder in eine die Breite des Anbaugerätes vergrößernde und in eine die Breite des Anbaugerätes verringernde Stellung schwenkbar sind,
**dadurch gekennzeichnet, daß**
der stützradseitige Schwenkbolzen (16) über mehrere schwenkbare Koppelhebel (13, 14) mit anbaugeräteseitigen Schwenklagern (51) verbunden ist.

2. Schwenkeinrichtung nach Anspruch 1,
**dadurch gekennzeichnet, daß**
die Schwenklager (51) auf einem schwenkbar gelagerten Tragarm (10) oder einer daran befestigten Koppelplatte (11) befestigt sind.

3. Schwenkeinrichtung nach Anspruch 1 oder 2,
**dadurch gekennzeichnet, daß**
die Schwenklager (51, 52), um die die Koppelhebel (13, 14) verschwenkbar sind, räumlich so angeordnet sind, daß die Koppelhebel (13, 14) in jeder Verschwenklage parallel zueinander liegen.

4. Schwenkeinrichtung nach einem oder mehreren der Ansprüche 1 bis 3,
**dadurch gekennzeichnet, daß**
das Anbaugerät innerhalb des Schwenkbereiches der Stützräder zwischen der breiteren und schmaleren Stellung durch die Stützräder (7) in jeder Stellung abstützbar ist.

5. Schwenkeinrichtung nach einem oder mehreren der Ansprüche 1 bis 4,
**dadurch gekennzeichnet, daß**
die Stützräder (7) in der Transportstellung in Fahrtrichtung (F) gesehen vor die Tragarme (10) schwenkbar sind.

6. Schwenkeinrichtung nach einem oder mehreren der Ansprüche 1 bis 5,
**dadurch gekennzeichnet, daß**
die Koppelhebel (13, 14) um nicht senkrecht angeordnete Schwenklager (51, 52) verschwenkbar sind.

7. Schwenkeinrichtung nach einem oder mehreren der Ansprüche 1 bis 6,
**dadurch gekennzeichnet, daß**
zwischen einer seitlich am Tragarm (10) befestigten Konsole (18) und einer mit den Koppelhebeln (14) verbundenen Halterung (19) ein Hydraulikzylinder (8) angeordnet ist.

8. Schwenkeinrichtung nach Anspruch 7,
**dadurch gekennzeichnet, daß**
mehrere Hydraulikzylinder (8) durch entsprechende Hydraulikventile in voneinander abweichende Ausfahrstellungen bringbar sind.

## Claims

1. A pivot device for support wheels (7) mounted rotatably between abutments in a pivot angle on mounting implements for agricultural machines, wherein the support wheels which are connected by way of support arms (10) to the side walls (6) of the front-mounting implement serve for supporting the mounting implement or for ground-following purposes on the ground and the support wheels are pivotable into a position of increasing the width of the mounting implement and into a position of reducing the width of the mounting implement, **characterised in that** the pivot pin (16) at the support wheel side is connected to pivot mountings (51) at the implement side by way of a plurality of pivotable coupling levers (13, 14).

2. A pivot device according to claim 1 **characterised in that** the pivot mountings (51) are fixed on a pivotably mounted support arm (10) or a coupling plate (11) secured thereto.

3. A pivot device according to claim 1 or claim 2 **characterised in that** the pivot mountings (51, 52) about which the coupling levers (13, 14) are pivotable are spatially so arranged that the coupling levers (13, 14) are parallel to each other in each pivotal position.

4. A pivot device according to one or more of claims 1 to 3 **characterised in that** the mounting implement can be supported by the support wheels (7) in any position within the range of pivotal movement of the support wheels between the wider and the narrower position.

5. A pivot device according to one or more of claims 1 to 4 **characterised in that** the support wheels (7) are pivotable into a position in front of the support arms (10) in the transport position as viewed in the direction of travel (F).

6. A pivot device according to one or more of claims 1 to 5 **characterised in that** the coupling levers (13, 14) are pivotable about pivot mountings (51, 52) which are not arranged perpendicularly.

7. A pivot device according to one or more of claims 1 to 6 **characterised in that** a hydraulic cylinder (8) is arranged between a bracket (18) secured laterally to the support arm (10) and a holder (19) connected to the coupling levers (14).

8. A pivot device according to claim 7 **characterised in that** a plurality of hydraulic cylinders (8) can be moved into mutually differing extension positions by corresponding hydraulic valves.

## Revendications

1. Dispositif de pivotement de roues d'appui (7), montées pivotantes sur un angle de pivotement entre butées, pour appareils portés de machines agricoles, dans lequel les roues d'appui reliées par des bras porteurs (10) aux parois latérales (6) de l'appareil porté servent à soutenir l'appareil porté et à suivre le profil du sol et peuvent être pivotées entre une position qui agrandit la largeur de l'appareil porté et une position qui réduit la largeur de l'appareil porté, **caractérisé en ce que** l'axe de pivotement (16) côté roue d'appui est relié par plusieurs bielles (13, 14) avec des paliers de pivotement (51) côté appareil porté.

2. Dispositif de pivotement selon la revendication 1, **caractérisé en ce que** les paliers de pivotement (51) sont fixés sur un bras porteur (10) monté pivotant ou sur une plaque d'accouplement (11) fixée sur celui-ci.

3. Dispositif de pivotement selon la revendication 1 ou 2, **caractérisé en ce que** les paliers de pivotement (51, 52) autour desquels peuvent pivoter les bielles (13, 14) sont disposés spatialement de manière à ce que les bielles (13, 14) soient parallèles entre elles dans toutes les positions de pivotement.

4. Dispositif de pivotement selon une ou plusieurs des revendications 1 à 3, **caractérisé en ce que**, sur la zone de pivotement des roues d'appui entre la position large et la position étroite, l'appareil porté peut reposer sur les roues d'appui (7) dans toutes les positions.

5. Dispositif de pivotement selon une ou plusieurs des revendications 1 à 4, **caractérisé en ce que** les roues d'appui (7) peuvent être pivotées dans une position de transport devant les bras porteurs (10), en regardant dans le sens de déplacement (F).

6. Dispositif de pivotement selon une ou plusieurs des revendications 1 à 5, **caractérisé en ce que** les bielles (13, 14) peuvent pivoter autour de paliers de pivotement (51, 52) qui ne sont pas disposés verticalement.

7. Dispositif de pivotement selon une ou plusieurs des revendications 1 à 6, **caractérisé en ce qu'**un vérin hydraulique (8) est disposé entre une console (18) fixée latéralement sur le bras porteur (10) et un support (19) relié aux bielles (14).

8. Dispositif de pivotement selon la revendication 7, **caractérisé en ce que** plusieurs vérins hydrauliques (8) peuvent être amenés par des vannes hydrauliques correspondantes dans des positions d'extension différentes les unes des autres.
